# EUROPEAN PATENT APPLICATION

(11) **EP 1 064 970 A2**
(43) Date of publication of application: **03.01.2001**
(21) Application number: 00117972.0
(22) Date of filing: 26.07.1996
(51) Int. Cl.: A63B 53/14, A63B 59/00

(54) **Sleeve-type golf club grip**

(30) Priority: 27.07.1995 US 507575; 28.12.1995 US 567339
(62) Divisional of application: 96305488.7
(71) Applicant: Huang, Ben, Huntington Beach, California 92648 (US)
(72) Inventor: Huang, Ben, Huntington Beach, California 92648 (US)
(74) Representative: Bucks, Teresa Anne

(57) **Abstract**

There is described a golf club grip (G) comprising a resilient sleeve (SL) that is positioned on and adhered to the upper portion of a golf club shaft. An elongated resilient strip (S) is spirally wrapped about the outer surface of the sleeve (SL). The strip (S) includes an open pored felt layer (42) having an inner surface abutting the sleeve and a smooth closed pore polyurethane layer (44) having its inner surface bonded to the outer surface of the textile layer (42) remote from the sleeve (SL) . The pores of the polyurethane layer (44) extend generally normal to the longitudinal axis of the sleeve (SL) and the ratio of the thickness of the polyurethane layer (44) to the felt layer (42) is a minimum of about 0.18.

There is also described a golf club having a golf club grip (G) of the above type and a strip for use in providing the golf club grip (G).

## Description

The present invention relates to an improved golf club grip which may be applied to a golf club shaft by a manufacturer, or alternatively, as a replacement for an original grip. The invention also relates to a golf club having such a grip.

Conventional golf club grips are molded from a single piece of rubber or synthetic plastic. When it is necessary to replace the original grip, such replacement is difficult and cannot be accomplished by the average golfer. Accordingly, the golfer is required to leave his golf club at a golf shop for several days for application of the replacement grip. Another disadvantage of conventional golf club grips is their tendency to become slippery when dampened, as for example, when playing under rainy conditions or by contact with perspiration formed on the golfer's hands. Slippery contact of a golfer's hands with a golf club grip reduces his feel of the golf club. Conventional golf club grips are made of a hard material which fails to provide adequate shock absorbing qualities.

The golf club grip described herein is intended to address the problems inherent to conventional golf club grips. Specifically, preferred embodiments of the golf club grip may be readily applied by a golfer thereby eliminating the delay and cost involved with replacing a conventional golf club grip. Golf club grips embodying the present invention also strengthen the golfer's grip on a club by providing increased tackiness between the golfer's hands and the golf club grip. The golf club grip enhances the player's feel and touch during play, thereby eliminating the need to wear a glove which is needed to protect against abrasion of a golfer's hand when using a conventional golf club grip and also to stay tacky when wet. The golf club grip is preferably formed of a synthetic polyurethane material bonded over felt that is readily compressible when gripped by a golfer thereby increasing his touch over the golf club, absorbing more vibration and shock, and also reducing fatigue. The grip is lighter in weight than conventional rubber grips, so that more of the total golf club weight is distributed to the golf club head thereby increasing club bead speed.

A preferred form of golf club grip embodying the present invention utilizes an elongated resilient strip comprising a layer of a textile, such as felt, bonded to a layer of polyurethane. The felt layer is adhered to and provides strength to the polyurethane layer. The polyurethane layer is of closed pore construction which provides a cushioned grip and enhanced tackiness to the golfer's hand. The strip is spirally wrapped about a resilient sleeve which has been slipped over and adhered to the grip-receiving upper portion of a golf club shaft by means of an adhesive which may be applied to a double-sided adhesive carrier. The adhesive is originally covered with a protective quick-release tape. The tape is peeled off the adhesive and the strip is then spirally wrapped about the sleeve with the edges of the tape in tight abutment so as to provide a smooth contour. This arrangement provides an improved securement of the grip to the golf club shaft, with such securement increasing the tighter the grip is grasped by the golfer.

Preferably the grip also utilizes sidewardly and outwardly curved, compressed reinforcement traction side edges along its length. Such side reinforcement edges inhibit unraveling of the grip from the racquet or golf club handle, enhances the frictional grip of the user and provides an improved appearance over existing grips. The traction side edges also reduce interference with other golf club grips as a club is withdrawn from a golfer's bag. The grip may either be used as a replacement grip, or, alteratively be fabricated as original equipment by a manufacturer of golf clubs.

An embodiment of the present invention is illustrated in the accompanying drawings in which:
Fig. 1 is a perspective view showing a golf club provided with an improved sleeve-type grip embodying the present invention;
Fig. 2 is a top plan view of the strip from which the grip is formed;
Fig. 3 is a sectional view taken along line 3-3 of Fig. 2;
Fig. 4 is an enlarged fragmentary vertical sectional view of such grip applied to a golf club shaft;
Fig. 5 is a side elevational view showing the resilient sleeve of the grip;
Fig. 6 is a side elevational view showing an adhesive carrier element of the grip;
Fig. 7 is a sectional view of the adhesive carrier taken in enlarged scale along line 7-7 of Fig. 6;
Figs. 8 and 9 are side elevational views showing the adhesive carrier being applied to the interior of the sleeve of Fig. 5;
Fig. 10 is a side elevational view showing the sleeve of Figs. 5, 8, and 9 being applied to a golf club shaft;
Fig. 11 is a side elevational view showing the sleeve applied to the golf club shaft;
Fig. 12 is a side elevational view showing the strip being spirally wrapped about the sleeve;
Fig. 13 is a side elevational view showing the strip being wrapped about the sleeve while the sleeve is carried by a collapsible mandrel;
Fig. 14 is a side elevational view showing a grip formed in accordance with Fig. 13 applied to a golf club shaft; and
Fig. 15 is a vertical sectional view taken in enlarged scale along line 15-15 of Fig. 14.

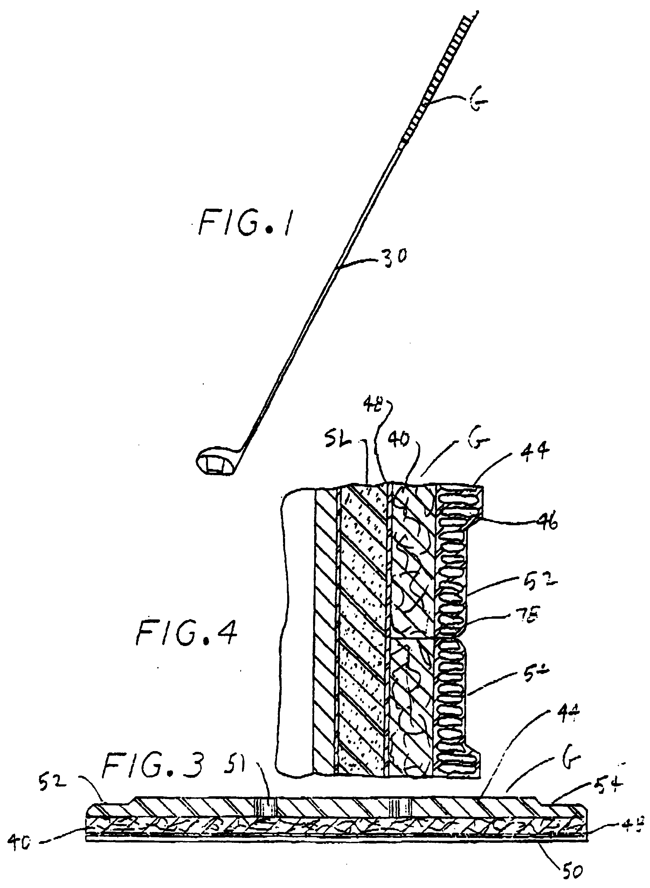

Referring to the drawings, an elongated resilient strip S utilized to provide a preferred form of golf club grip is shown in Fig. 2. Such strip S is adapted to be spirally wrapped about a split sleeve SL adhered to the upper portion of the shaft 30 of a conventional golf club to provide an improved golf club grip G as shown in Fig. 1.

Resilient strip S includes a textile layer 40 formed of a suitable open-pored material, such as felt, and has its upper surface bonded to the lower surface of a polyurethane layer 44. As indicated in Fig. 4, the polyurethane layer 44 is formed with closed pores 46 which extend vertically, i.e., generally normal to the longitudinal axis of the strip S. The pores 46 permit the polyurethane layer to be readily compressed by the gripping force of a golfer's hands. The polyurethane layer 44 may be fabricated in a conventional manner by coating one side of a felt strip with a solution of polyurethane, e.g., polyester or polyether, dissolved in dimethyl formaide (DMF), immersing the coated strip in water baths to displace the DMF and to cause the urethane to coagulate, and finally driving off the water by the application of water and heat. In this manner, the closed pores 46 are formed, while the underside of the polyurethane strip is bonded to the upper surface of the felt layer. In order to form the closed pores 46 the ratio of the thickness of the polyurethane layer to the felt layer should be a minimum of 0.18. The underside of the felt layer 40 is provided with a conventional adhesive 48 which is originally covered with a protective quick-release tape 50, as shown in Fig. 3. The layer of polyurethane 44 provides a cushioned grasp of the player's hands on the shaft 30 and also enhances the player's grip by providing increased tackiness between the player's hands and the golf club grip, as compared to conventional golf club grips. The felt layer 40 provides strength to the polyurethane layer 14 and also serves as a means for attaching the bonded-together polyurethane and felt strip to sleeve SL.

Referring now to Figs. 2 and 3, the outer surface of the polyurethane layer 44 may be formed over its upper portion with a plurality of air passages 51. Air passages channel perspiration or other dampness into the felt layer 40 for evaporation to further reduce slippage of the golfer's hand on the grip G.

Referring now to Figs. 2, 3, and 4 the strip S is shown formed with sidewardly and outwardly extending recessed, reinforcement, traction side edges, generally designated 52, and 54. The reinforcement side edges may be formed by means of a heated platen (not shown) which compresses the outer portions of the side edges of the polyurethane layer below the original exterior surface dimension of the strip. Such compression increases the strength of the polyurethane layer in the vicinity of the side edges 52 and 54, prevents unraveling of the strip from the sleeve, enhances the golfer's gasp of the grip, and reduces interference with other golf clubs as a club is withdrawn from a golf bag.

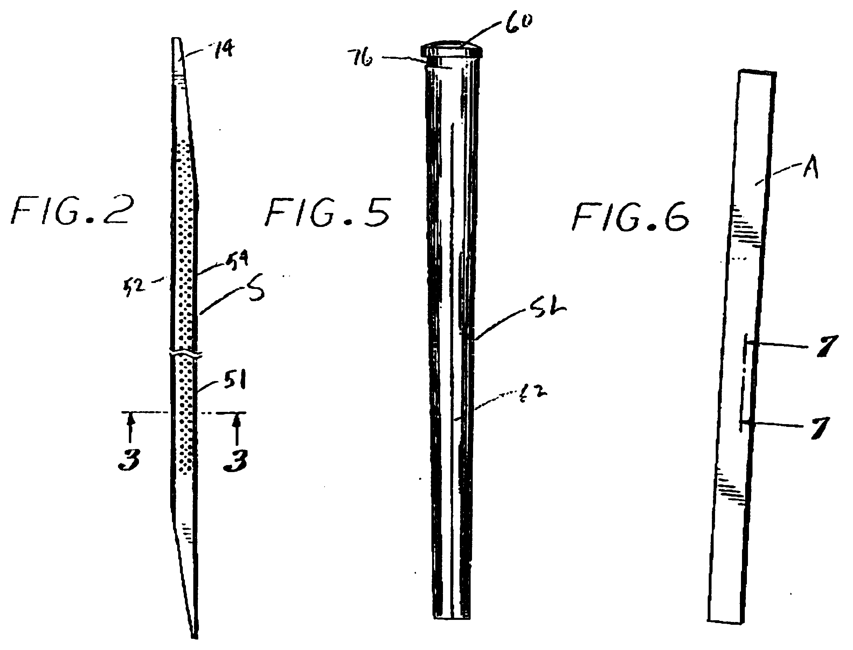

Referring now to Figs. 5 and 8-12, there is shown split sleeve member SL which may be utilized with the golf club grip embodying the invention. Such sleeve SL may be of unitary synthetic plastic foam or rubber construction utilizing an integral cap 60 which abuts the upper end of the golf club shaft 30. The inner diameter of the sleeve SL should be so selected as to effect a snug fit with the grip receiving portion of the golf club shaft 30 when the sleeve is applied thereto. One side of the sleeve SL is formed with a longitudinally extending slit 62. It is important to note that the sleeve may be affixed to the golf club shaft utilizing an elongated, flat adhesive carrier A shown in Figs. 6-9. The inner surface of adhesive carrier A includes a flexible body 64 coated with a suitable adhesive 66 on its inner surface. Body 64 is coated on its outer surface with the same type of adhesive 68. Protective tapes 70 and 72 initially cover adhesives 66 and 68.

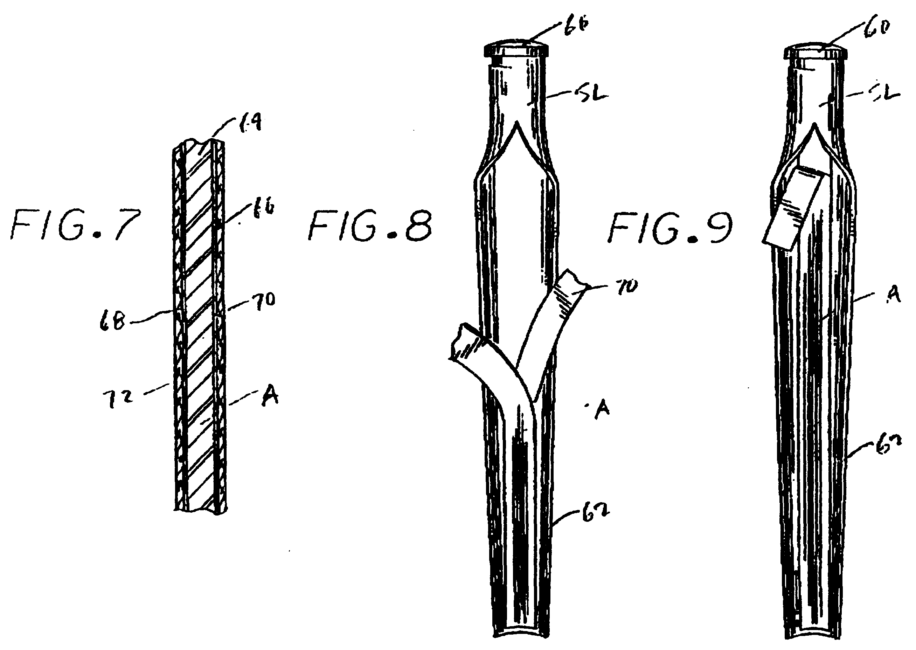

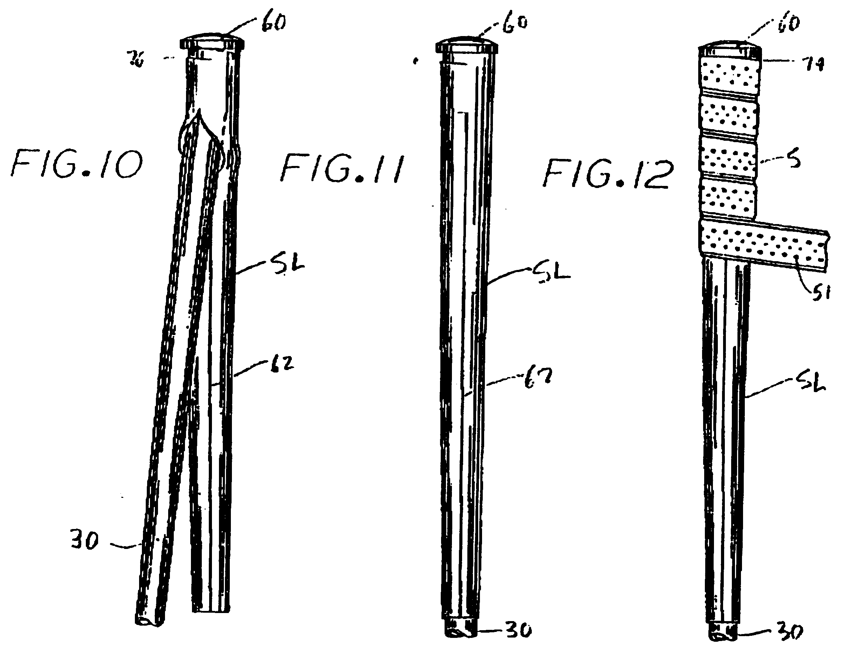

To apply the sleeve SL to the upper end of the golf club shaft 30 the protective tape 70 is first peeled off the adhesive layer of adhesive carrier A, as indicated in Fig. 8, to secure the adhesive carrier to the interior of the sleeve. Protective tape 72 is then peeled off adhesive 68. Thereafter, the upper end of the golf club shaft is manipulated into the confines of the sleeve SL by separating the sleeve along its slit 62, as shown in Fig. 10. The appearance of the sleeve as applied to the golf club shaft is shown in Fig. 11. Adhesive 68 secures the sleeve SL to the golf club shaft. The next step is to wrap the strip S over the sleeve SL. This accomplished by first removing the protective tape 50 from the underside of the strip S. Thereafter, the beveled upper end 74 of the strip S is adhered to the upper end of the sleeve SL below the underside of the sleeve's cap 60. It should be noted that the upper end 74 of sleeve SL is formed with an indentation 76 to receive the beveled upper end 74 of snip S. The remainder of the length of the strip S is then spirally wrapped about the sleeve SL with the edges of the strip S in tight abutment as indicated at 78 in Fig. 4. The lower portion of the strip will then be affixed to the sleeve and golf club shaft by spirally wrapping finishing tape (not shown) thereover. Preferably, the finishing tape is then covered by a conventional frusto-conical protective ferrule (not shown). Note that the strip S may be wrapped about the sleeve SL by a manufacturer to provide a preassembled grip G. The preassembled grip would then be adhered to the golf club shaft as a replacement grip by a golf shop.

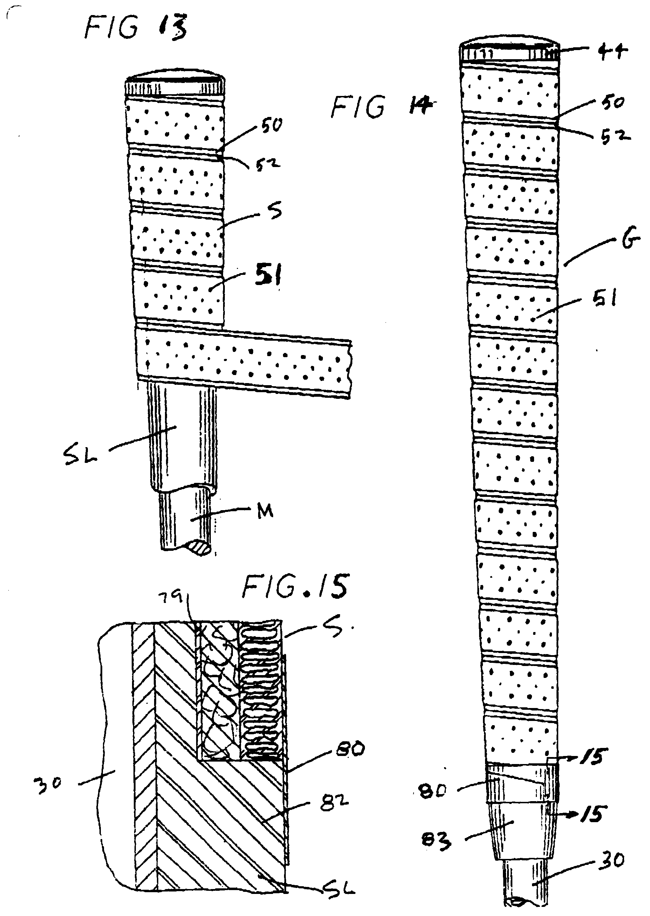

Alternatively, the sleeve can be made without the slit 62 and the grip can be slipped over a golf club shaft after the strip has been wrapped about the sleeve as a second form of preassembled slip-on grip. Thus, referring to Fig. 13, the strip S is shown being wrapped around the sleeve SL while the sleeve is carried by a conventional collapsible mandrel M. The underside of the felt layer 32 of the strip S may be adhered to the sleeve SL, by the use of adhesive 79. Note that the more the grip is used, the tighter the attachment provided by the adhesive layers. Referring to Fig. 14, the completed slip-on grip G is shown applied to the grip-receiving portion of golf club shaft 30. The grip may be adhered to the golf club shaft by means of a conventional solvent. It is important that the grip G is rotated in a direction which tends to wrap the strip S against the sleeve SL when the grip is applied to the golf club shaft 30 so as to eliminate any gaps between the abutting side edges of the strip. Finishing tape 80 may be utilized to secure the lower portion of the strip to a radially extending guide cylinder 82 formed at the lower portion of the sleeve 84 to prevent unraveling of the strip relative to the sleeve. Also, a conventional ferrule 83 may be interposed between the lower portion of the sleeve and the golf club shaft 30. Guide cylinder 82 rigidifies the lower end of sleeve SL when grip G is slipped over a golf club shaft.

The aforedescribed golf club grip may be utilized as original equipment on a golf club or, alternatively, may be utilized as a replacement for an original golf club grip. Installation of the golf club grip does not require solvent or special tooling, and may be readily accomplished by the average golfer. Accordingly, the golfer is not required to leave his golf clubs at a golf shop for several days in order to have his original golf club grips replaced. Also, the cost of replacing an original golf club grip with a golf club grip embodying the invention is less than the cost of replacing a conventional grip. Golf club grips embodying the invention also provide a firm grasp of the grip by the golfer, even when such grip is dampened, as for example, when playing under rainy conditions or by contact with perspiration formed on the golfer's hands. The grip also absorbs more vibration and shock than conventional grips and thereby reduces hand fatigue. Accordingly, the golfer can maintain a better hold on the grip than with conventional grips and can thereby maintain better control of his golf swing. Such control is enhanced by the tackiness inherent to the polyurethane layer of the grip. Also, golf club grips embodying the invention enhance the player's feel and control during a swing by eliminating the need to wear a glove which protects against skin abrasion. Since a grip made in accordance with the invention is lighter in weight than a conventional molded rubber or synthetic plastic, more of the total weight of the golf club is distributed to the club bead, thereby increasing club head speed and the distance of golf ball travel.

## Claims

1. A grip (G) for a golf club shaft, that includes a strip (S) having a felt layer (40) having an inner surface and a smooth closed pore polyurethane layer (44) having its inner surface bonded to the outer surface of the felt layer (40), with the pores (46) of such polyurethane layer (44) extending generally normal to the longitudinal axis of the strip (S), and with the felt layer (40) providing strength for the polyurethane layer (44) while the polyurethane layer (44) both absorbs shocks and provides tackiness so as to inhibit slippage of a user's hand relative to the shaft; arid such grip (G) being characterized by the provision of heat compressed recessed side edges (52, 54) and formed in the polyurethane layer (44) of the strip, and a resilient sleeve (SL) disposed upon the grip-receiving portion of the shaft, the strip (S) being spirally wrapped about the sleeve.

2. The golf club grip (G) according to claim 1, wherein the sleeve (SL) is formed with a longitudinal slit (62) that is opened along the slit (62) to position the sleeve (SL) on the upper portion of the golf club shaft (30), the sleeve (SL) then being adhered to the upper portion of the golf club shaft (30).

3. The golf club grip (G) according to claim 1, wherein the sleeve (SL) is formed with a longitudinal slit (62) that is opened along the slit (62) to position the sleeve (SL) on the upper portion of the golf club shaft (30), the grip (G) also including an elongated adhesive carrier (A) to adhere the sleeve (SL) to the shaft (30), said adhesive carrier (A) being coated on its opposite sides with first and second layers of adhesive (66, 68) said carrier (A having first and second protective tapes (70, 72) originally covering the adhesive layers (66, 68).

4. The golf club grip (G) according to claim 1, wherein the strip (S) is wrapped about the sleeve (SL) while the sleeve (SL) is positioned upon a mandrel (M) to provide a preassembled grip (G) which is slipped on the shaft (30).

5. The golf club grip (G) according to claim 1, 2, 3, 4 or 5 wherein the polyurethane layer (44) has air passages (51) to channel moisture into the felt layer (42) for evaporation.

6. A golf club grip (G) as claimed in claim 1 in which the side edges of the strip are in light abutment.

7. A strip (S) for use in providing a golf club grip (G) having a felt layer (40) having an inner surface and a smooth closed pore polyurethane layer (44) having its inner surface bonded to the outer surface of the felt layer, with the pores (46) of such polyurethane layer (44) extending generally normal to the longitudinal axis of the strip (S), and with the felt layer (40) providing strength for the polyurethane layer (44) while the polyurethane layer (44) both absorbs shocks and provides tackiness so as to inhibit slippage of a user's hand relative to the shaft, such strip (S) being characterized by heat compressed recessed reinforcing side edges (52, 54) formed in the polyurethane layer (44) of the strip (S) along the length of the strip (S).

8. A strip (S) as claimed in claim 8 in which the polyurethane layer (44) has air passages (51) to channel moisture into the felt layer (42) for evaporation.

9. A golf club having a golf club grip (G) in accordance with any of claims 1 to 6.
